# EUROPEAN PATENT SPECIFICATION

(11) **EP 1 535 824 B1**
(45) Date of publication and mention of the grant of the patent: **27.08.2008**
(21) Application number: 03771332.8
(22) Date of filing: 25.07.2003
(51) Int. Cl.: B62D 1/18, B21D 26/02, B21D 51/16, B21D 53/88

(54) **STEERING COLUMN DEVICE**
LENKVORRICHTUNG
DISPOSITIF DE COLONNE DE DIRECTION

(30) Priority: 25.07.2002 JP 2002217006
(43) Date of publication of application: 01.06.2005
(73) Proprietor: NSK LTD., Shinagawa-ku, Tokyo 141-8560 (JP)
(72) Inventor: NISHIOKA, Masaki, c/o NSK LTD., Maebashi-shi, Gunma 371-0853 (JP); SAWADA, Naoki, c/o NSK LTD., Maebashi-shi, Gunma 371-0853 (JP)
(74) Representative: Cross, James Peter Archibald
(86) International application number: PCT/JP2003/009437
(87) International publication number: WO 2004/011318

(56) References cited:
- EP-A- 0 647 537
- JP-A- 8 230 692
- JP-A- 8 276 852
- JP-A- 10 007 003
- JP-A- 2000 103 339
- JP-A- 2000 127 991
- JP-A- 2000 159 042
- JP-A- 2001 514 121
- JP-U- 1 062 169

## Description

### Field of the Invention

The present invention relates to a steering column apparatus for constituting a steering device for a vehicle or the like, and more specifically, to a technology which seeks to secure an enough space around the knees of a driver, according to embodiments, a tilt adjusting mechanism and a power steering apparatus of a column assist type, or the like, is additionally provided in the steering column apparatus.

### Related Background Art

Since a steering apparatus of a vehicle is to be used (for steering) by many and unspecific drivers, it is desirable that the position of a steering wheel is adjustable in compliance with the physique or the posture of each driver. In order to satisfy such desire, a tilt adjusting mechanism or a telescopic adjusting mechanism is widely employed not only for passenger cars, but also for freight cars.

The tilt adjusting mechanism is a mechanism to adjust the position of a steering wheel in the up-and-down direction, and is constituted by a tilt pivot for rockably supporting a steering column, a tilt position fixing means for fixing the steering column at a desired position (rocking angle), and the others. On the other hand, the telescopic adjusting mechanism is a mechanism for adjusting the position of the steering wheel in the back-and-forth direction (the axial direction of the steering shaft), and is constituted by an expandable unit of a double tube type or the like to be used for expansion and/or contraction of the steering shaft, a telescopic fixing means for fixing the steering shaft at a desired position (with an amount of expansion/contraction), and the others.

Hitherto, it is general that, as the tilt fixing means, a distance bracket formed of a steel plate is connected to a steering column formed of a steel pipe by welding, and this distance bracket is pressed to be fixed by a vehicle body-side bracket which is formed of a steel plate. However, with such an arrangement, the number of the constituent parts and that of the welding steps are increased, and moreover, variable inconveniences are inevitably caused by thermal distortion, etc., at the welding. As a result, it is proposed in Japanese Patent Application Laid-Open No. 8-276852 or the like (hereinafter called the prior art) a structure in which a distance unit is formed to be expanded by plastic working.

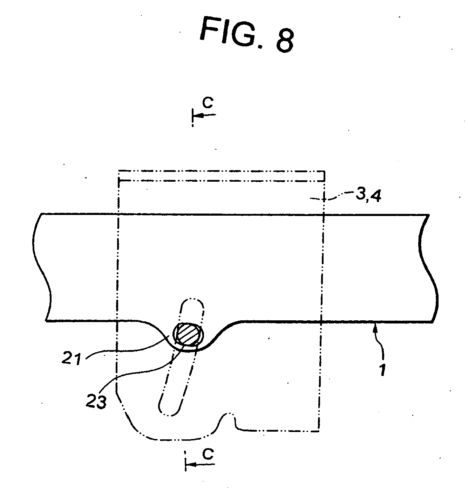

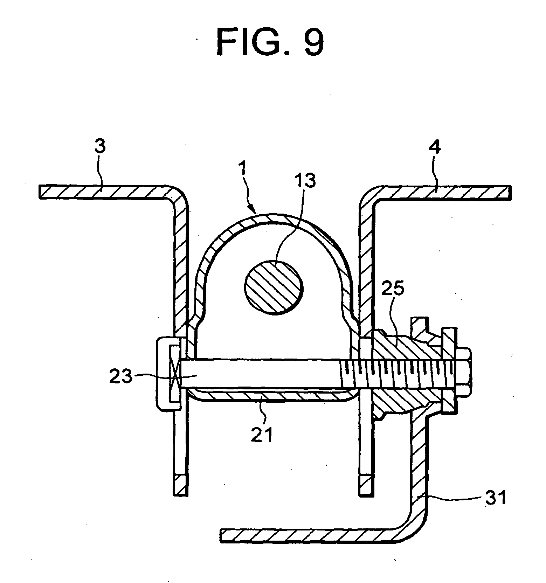

Fig. 8 is a side view of an essential portion of a steering column apparatus of the prior art, and Fig. 9 is an enlarged cross-sectional view taken along line C-C in Fig. 8. The steering column 1 of the prior art is formed of a steel pipe, and a distance unit 21 is formed to be expanded in a lower part in Fig. 8 and Fig. 9. A tilt bolt 23 is inserted through the distance unit 21, and there is provided a tilt adjusting mechanism which is thread-engaged comprised of a nut 25 thread-engaged with the tilt bolt 23, a tilt lever 31, and the others, in addition to tilt brackets 3, 4. In this steering column apparatus, the nut 25 advances to the tilt bolt 23 due to thread-engagement therewith upon rotation of the tilt lever 31 disposed on a side of the bracket 4 on the car body side, so as to sandwich to press the distance unit 21 (steering column 1) by and between the tilt brackets 3, 4 and/or to release this sandwiched state. According to the steering column apparatus of the prior art, it is possible to reduce the number of the constituent parts and that of the welding steps to reduce the manufacturing cost, and at the same time, to prevent inconveniences which may be caused by the thermal distortion or the like at the welding.

JP 2000 103339 A discloses a steering column apparatus comprising: a steering shaft to which a steering wheel may be mounted at a rear end portion thereof; a cylindrical steering column for rotatably supporting said steering shaft therein; a vehicle body-side bracket arrangement comprising a portion to be fixed to a vehicle body strength member positioned above the steering column and further comprising a pair of vertically extending side plates disposed to sandwich and fix said steering column; a distance unit disposed between the side plates of said body-side bracket arrangement; and position adjusting means for making the position of said steering column with respect to said body-side bracket arrangement adjustable within a predetermined adjustment range, said position adjusting means comprising an adjusting bolt passing through said body-side bracket arrangement and through side plates of said distance unit and a fastening mechanism co-operable with said adjusting bolt to releasably clamp said distance unit through said body-side bracket arrangement, said adjusting bolt being positioned above said steering shaft.

On the other hand, for a steering system of a vehicle, there is widely employed a so-called power steering apparatus which uses an external power source to perform steering assist. Hitherto, as a power source for a power steering apparatus, an oil pressure pump of a vein scheme is generally used, and such an oil pressure pump is mostly driven by an engine. However, in a power steering apparatus of this type, a driving loss of an engine becomes great since the oil pressure pump is usually driven all the time (around several to ten horse powers at the time of the maximum load). As a result, it is difficult to employ such power steering apparatus in a mini vehicle or the like of small displacement, and a fuel efficiency is inevitably deteriorated significantly even in a vehicle of comparatively large displacement.

Accordingly, in order to solve these problems, an electric power steering apparatus (hereinafter called the EPS) employing an electric motor as its power source recently attracts attention. The EPS has such characteristics as that no direct driving loss of an engine is generated since a built-in battery is used as the power source for the electric motor, that deterioration of the fuel efficiency (a driving loss of the engine related to an alternator) can be avoided since the electric motor is actuated only for steering assist, that an electronic control can be effected very easily, etc. Note that EPSs are classified into a column-assist type and a rack-assist type, depending on a position of attachment of the electric motor or a decelerating mechanism (hereinafter called the EPS mechanism). Currently, a column-assist type EPS which is advantageous in terms of the manufacturing cost and a space of installation is dominantly used. In a column-assist type EPS, the EPS mechanism is secured to the tip end of the steering column to be integral therewith, and, in a steering column apparatus provided with a tilt adjusting mechanism, the EPS mechanism is rocked together with the steering column around the tilt pivot at a tilt adjustment.

However, the above-described steering column apparatus of the prior art has the following drawbacks. That is, in the steering column of the prior art, the tilt bolt 23 is positioned below the steering shaft 13 so that an amount of protrusion thereof is small, compared with that in a steering column to which a distance bracket is connected by welding. However, it is inevitable that the lower ends of the tilt brackets 3, 4 are greatly protruded from the lower surface of the steering column 1 in a state that the steering column 1 is most elevated. For this reason, when the driver moves forward due to inertia at the time of collision of a vehicle, there is a possibility that a knee or the like of the driver gets in contact with the lower end edges of the tilt brackets 3, 4 formed of steel plates.

On the other hand, in the steering apparatus provided with a column-assist type EPS, a comparatively large EPS mechanism is secured to the tip end of a steering column to be integral therewith, so that an indoor space is significantly cramped. Particularly, in a small-sized car or the like in which a column-assist type EPS is usually employed, the arrangement of the tilt adjusting mechanism below the steering column becomes an obstacle to securing a sufficient space around the knees of the driver or a survival space at the time of collision.

### DISCLOSURE OF THE INVENTION

The present invention has been contrived taking the above circumstances into consideration, and an object thereof is to seek to provide a steering column apparatus which can secure an enough space around the knees of a driver when, according to embodiments, a steering position adjusting mechanism and a column-assist type electric power steering apparatus is additionally provided.

According to a first aspect of the present invention, there is provided a steering column apparatus according to claim 1.

Also, in the steering column apparatus according to the present invention, it is preferable that the steering column is adjustable in a tilting direction with respect to the body-side bracket arrangement, and that the lower end of the body-side bracket arrangement is positioned higher than the lower surface of the steering column.

Also, in the steering column apparatus according to the present invention, it is preferable that the plastic working is performed by hydroforming.

According to a second aspect of the present invention, there is provided a vehicle according to claim 4.

According to embodiments of a steering column apparatus of the present invention, it is rendered possible to reduce an expanded amount of the distance unit from the steering column to the minimum by, for example, disposing an adjusting bolt immediately above the steering shaft, so as to make a layout of the steering column apparatus easy. In case of the steering column apparatus having a tilt adjusting mechanism, a range of movement of the adjusting bolt is positioned comparatively high with respect to the steering column, so that the lower end of the body-side bracket is difficult to be protruded from the lower surface of the steering column. As a result, there is a less fear that a knee of the driver gets in contact with the body-side bracket at the time of collision or the like of the car.

### BRIEF DESCRIPTION OF THE DRAWINGS

In order that the present invention may be more readily understood, embodiments thereof will now be described, by way of example only with reference to the accompanying drawings, of which:
Fig. 1 is a lateral view of an first examplary steering column apparatus;
Figs. 2A and 2B are respectively an enlarged cross-sectional view taken along line A-A in Fig. 1 and an enlarged cross-sectional view taken along line B-B in Fig. 1;
Fig. 3 is a lateral view of the first examplary steering column apparatus;
Fig. 4 is an enlarged cross-sectional view taken along B-B line in Fig. 3,
Fig. 5 is a lateral view of a steering column apparatus according to a first embodiment of the present invention;
Fig. 6 is a lateral view of a second examplary steering column apparatus;
Figs. 7A and 7B are respectively an enlarged cross-sectional view taken along A-A line in Fig. 6 and an enlarged cross-sectional view taken along line B-B in Fig. 6;
Fig. 8 is a lateral view of the essential portion of a steering column apparatus according to the prior art; and
Fig. 9 is an enlarged cross-sectional view taken along C-C line in Fig. 8.

### DETAILED DESCRIPTION OF THE PREFERRED EMBODIMENTS

Description will be made below on an embodiment of a steering column apparatus according to the present invention.

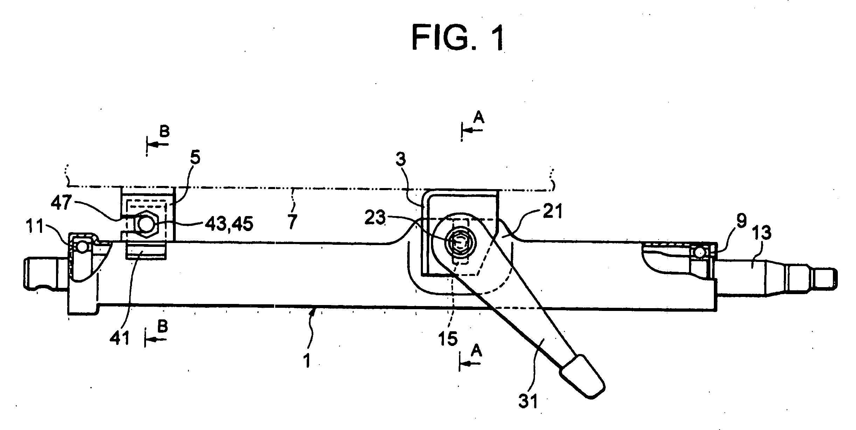

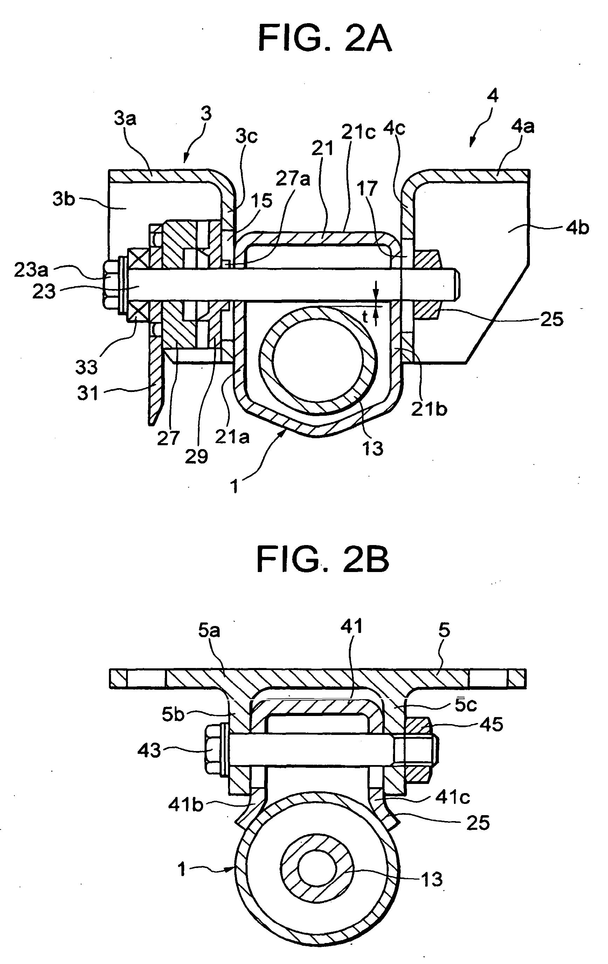

Fig. 1 is a side view of a first examplary steering column apparatus, and Fig. 2A is an enlarged cross-sectional view taken along line A-A in Fig. 1.

The steering column 1 is attached to a body-side strength member 7 through upper brackets 3, 4 which are formed of steel plates by press-forming to serve as vehicle body-side tilt brackets and a pivot bracket 5 which is formed of a steel plate by press-forming, so as to support an upper steering shaft (hereinafter simply called the steering shaft) 13 to be rotatable through bearings 9, 11. The upper brackets 3, 4 and the pivot bracket 5 are preferably mounted on the vehicle body-side strength member 7 to be detachable at a secondary collision by a known mechanism.

The upper brackets 3, 4 have the width in the length direction of the steering shaft, and are extended symmetrically in a direction perpendicular to an extending direction of the steering shaft, that is, the right-and-left direction in Fig. 2A, and integrally comprise a pair of vehicle body mounting portions 3a, 4a secured to the vehicle body-side strength member by the use of fixing members (not shown) such as bolts.

Front wall portions 3b, 4b which are bent substantially at right angles at the front ends of the body mounting portions 3a, 4a of the upper brackets 3,4 to be extended downward, respectively, the body mounting portions 3a, 4a, and a pair of side plate portions 3c, 4c which are bent substantially at right angles inside the front wall portions 3b, 4b, respectively, to be extended backward (to the right in Fig. 1) and in the up-and-down direction are formed as a unitary structure.

While a steering wheel is attached to a rear end of the steering shaft 13 (the right end in Fig. 1), a lower steering shaft is coupled to a tip end of the steering shaft 13 (the left end in Fig. 1) through a universal joint. The lower steering shaft is connected to a rack and pinion mechanism of a steering mechanism which interlocks with tires. In Fig. 2A,reference numerals 15 and 17 denote tilt adjusting holes formed on the upper brackets 3, 4.

The steering column 1 is formed of a steel pipe by hydroforming to take a substantially cylindrical shape, and the steering column 1 is formed with a distance unit 21 expanded at upper positions, corresponding respectively to side plate portions 3c, 4c of the upper brackets 3,4. The distance unit 21 integrally comprises flat side wall portions 21a, 21b which are pressed and sandwiched by and between the side plate portions 3c, 4c of the upper brackets 3, 4 and an apex portion 21c which connects these side wall portions 21a, 21b at the upper ends thereof.

The side plate portions 3c, 4c of the upper bracket 3 are formed with elongated holes 15, 17 for tilt adjustment which will be described later, and circular holes are formed on the side wall portions 21a, 21b of the distance unit 21 to be corresponding thereto. The distance unit 21 is pressed and sandwiched between the side plate portions 3c and 4c of the upper bracket 3 with a predetermined clamping force by the bolt 23 inserted through the elongated holes 15, 17 for tilt adjustment of the side plate portions 3c, 4c and through the through holes of the side wall portions 21a, 21b, and a nut 25. Known cam elements 29, 27, a tilt adjusting lever 31 and a thrust bearing 33 are interposed on the bolt 23 between the head portion 23a of the bolt 23 and the bracket side plate portion 3c, from the side of the side plate portion 3c. The cam element 29 is unable to rotate since a projection 27a extended rightward in Fig. 2A is engaged with the elongated hole 15 of the bracket side plate 3c. The other cam element 27 is in an integral relationship with the tilt adjusting lever 31. When the tilt adjusting lever 31 is manually rotated, the cam element 27 is rotated together. As a result, a relative position between the cam elements 27, 29 is changed in the axial direction of the bolt 23, so that a distance between the cam element 27 and the nut 29 is changed to change a distance between the side plate portions 3c and 4c, thereby clamping and fixing the side wall portions 21a, 21b of the distance unit 21 or releasing this clamped and fixed state.

As an adjusting mechanism for tilt adjustment, a known screw mechanism may be employed, instead of the above-described cam mechanism.

In the present exemplary apparatus, the above-described distance unit 21 is formed to be expanded in an upper part than the axial line of the steering shaft 13 on the steering column 1, to be extended along a predetermined length of a column intermediate portion.

In case of the present exemplary apparatus, the tilt bolt 23 is inserted through immediately above the steering shaft 13 with a predetermined space t (e.g. 1 mm) therebetween inside the distance unit 21 (steering column 1).

On the other hand, in a front part of the vehicle seen from the upper brackets 3, 4, the horizontally extended body mounting portion 5a of the pivot bracket 5 serving as the lower bracket on the body side is secured to the vehicle body-side strength member 7 by a bolt, or the like. The pivot bracket 5 is provided with a pair of vertical plate portions 5b, 5c which are parallel to each other and are extended downward from the body mounting portion 5a.

A column-side lower bracket 41 which is secured to the steering column 1 in a front part of the vehicle integrally comprises flat plate portions 41b, 41c which are extended in the up-and-down direction to be corresponding to the vertical plate portions 5b, 5c of the pivot bracket 5 to be respectively brought into pressure contact. Circular holes are respectively formed on the flat plate portions 41b, 41c of the column-side lower bracket, and these circular holes are inserted by the bolt 43 to be clamped by the nut 45.

In the present exemplary apparatus, the column-side lower bracket 41 is formed separately from the steering column 1, and is fixed to the steering column 1 by welding. However, the column-side lower bracket 41 may be formed by expanding the steering column 1 by hydroforming, or the like, in the same manner as the distance unit 21 described above. A cut-away portion 47 in a substantially U shape is formed on the pivot bracket 5 to be open toward a front part of the vehicle, and the pivot bolt 43 is inserted into the rear end side of this cut-away portion 47. Note that the steering column 1 is arranged to be rockable around the pivot bolt 43, and the driver can adjust a vertical position of the steering wheel within a predetermined range by operating the tilt lever 31.

A mode of an operation of the present exemplary apparatus will be described in the following.

When the position of the steering wheel becomes inappropriate because of change of drivers, or the like, in case of the steering column apparatus of the Present exemplary apparatus, first the driver rotates the tilt lever 31 clockwise to release the cam engagement between the tilt cams 27, 29. Then, the clamping force which has worked on the distance unit 21 of the steering column 1 through the upper brackets 3, 4 is extinguished so that the steering column 1 is allowed to rock in a predetermined amount around a pivot pin 31. With this arrangement, the driver can tilt the steering column 1 so as to adjust the steering wheel to a desired vertical position.

Upon completion of the positional adjustment of the steering wheel, the driver rotates the tilt lever 31 counter-clockwise to bring the tilt cams 27, 29 into engagement. Then, the upper bracket 3 is sandwiched with pressure by and between the tilt cam 29 and the nut 25, and the inner surfaces of the upper brackets 3, 4 are brought into pressure contact with side surfaces of the distance unit 21. As a result, the steering column 1 (that is, the steering wheel) is fixed at a desired position with respect to the upper brackets 3, 4.

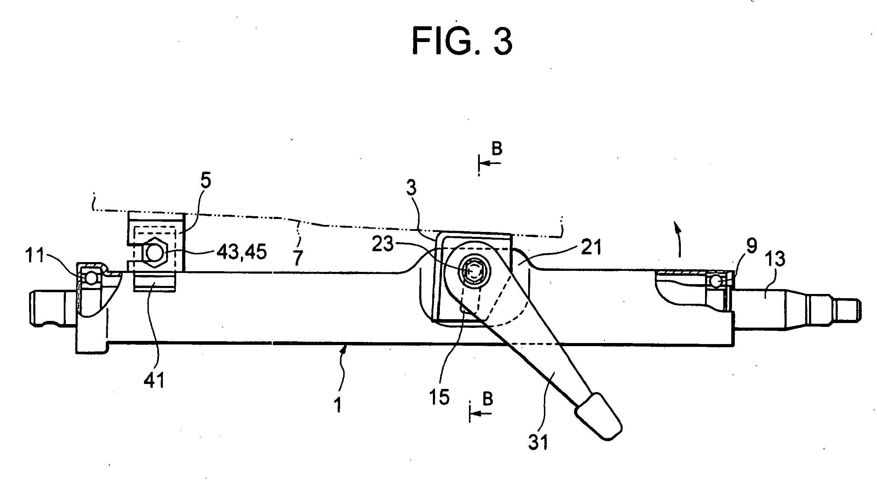

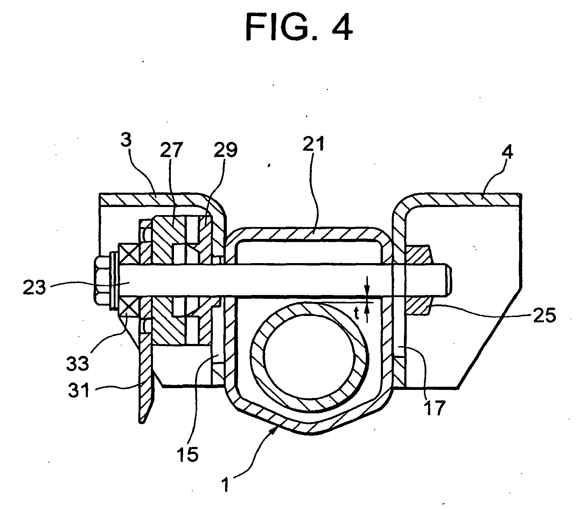

On this occasion, since the upper bolt 23 is positioned above the steering shaft 13 in the present exemplary apparatus, a range of movement of the upper bolt 23 is positioned comparatively high, with respect to the steering column 1, and the vertical dimension of the upper brackets 3, 4 is conspicuously small, compared with that of the prior art. As a result, even when the steering column 1 is disposed at the highest position, as shown in Fig. 3 and Fig. 4 (an enlarged cross-sectional view taken along line B-B in Fig. 3), the lower ends of the upper brackets 3, 4 are not protruded from the lower surface of the steering column 1 and there is no fear that a knee or the like of the driver gets in contact with the upper brackets 3, 4 even at the time of collision of the car or the like.

On the other hand, in the present exemplary apparatus, since the distance unit 21 is formed by hydroforming and a space t between the tilt bolt 23 and the steering shaft 13 is small, the vertical dimension of the steering column 1 in the distance unit 21 can be reduced. With this arrangement and with the small vertical dimension of the upper brackets 3, 4, the tilt adjusting unit can be made compact, so that a layout of the steering column apparatus becomes very easy.

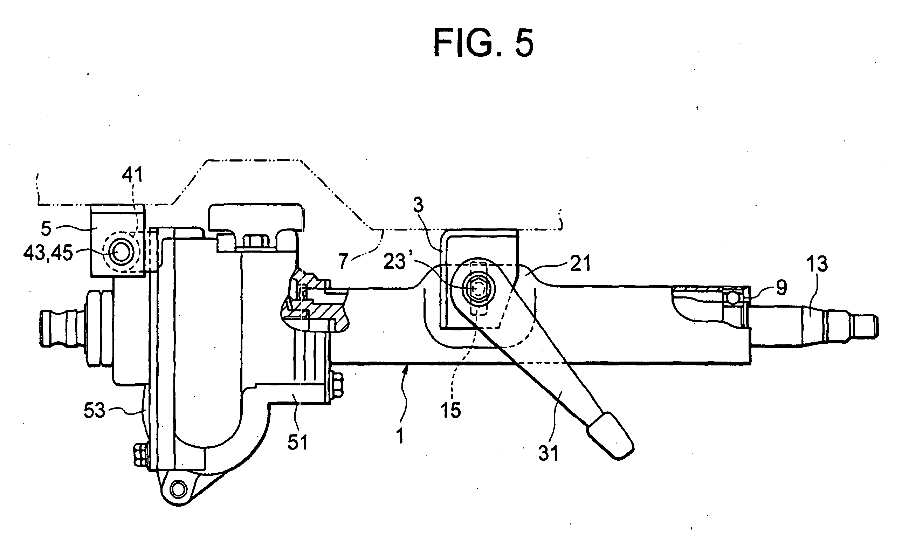

Fig. 5 is a side view of a steering column apparatus according to an embodiment of the present invention. In the present embodiment, the present invention is applied to a steering column apparatus which is provided with a column-assist type EPS. However, the present embodiment is otherwise essentially the same as the first exemplary apparatus described above, so that the members having the same functions as those in the above-described first exemplary apparatus are given the same reference numerals and symbols and description thereof will be omitted.

In the present embodiment, the front end of a comparatively short-sized steering column 1 is thrust to be secured to an EPS housing 51 which accommodates a decelerating mechanism, a controller, and the like, to be integral therewith, and an electric motor 53 is mounted on a side of the EPS housing 51. When a rotational torque of the steering shaft 13 is detected by a sensor, the electric motor 53 is driven and controlled by the controller to be rotated, and then a rotating force thereof is transmitted to the steering shaft 13 through the decelerating mechanism to perform power assist.

In the present embodiment, a tilt pivot which is defined by the pivot bracket 5 for tilt adjustment is disposed on the EPS housing in a front part of the vehicle, and at a position higher that the steering axial line. The tilt pivot may be provided in a rear part of the car, rather than the motor.

In the present embodiment, the steering column 1 is provided with the comparatively large EPS housing 51 and electric motor 53. However, since the tilt adjusting mechanism is compact, like in the first exemplary apparatus described-above, the layout of the present embodiment is very easy, compared with that of a conventional apparatus. For example, though an unrepresented meter cluster, etc., are positioned in an upper part of the rear end of the steering column 1, interference between the meter cluster, etc., and the tilt brackets 3, 4 hardly occur even if a space around the knees of the driver is sufficiently provided since the vertical dimension of the tilt brackets 3, 4 is small, which results in higher freedom in designing. Note that the mode of operation and the effect at the time of collision or the like of the car described in the first exemplary appartus above are entirely the same as those in the present embodiment, so that description thereof will be omitted.

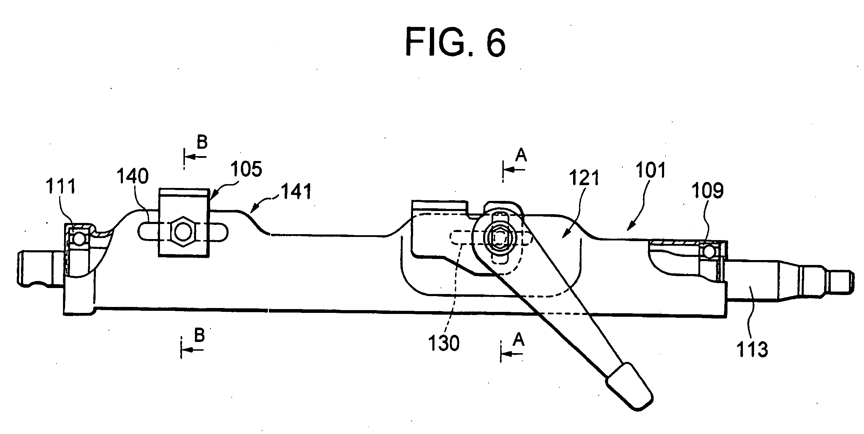

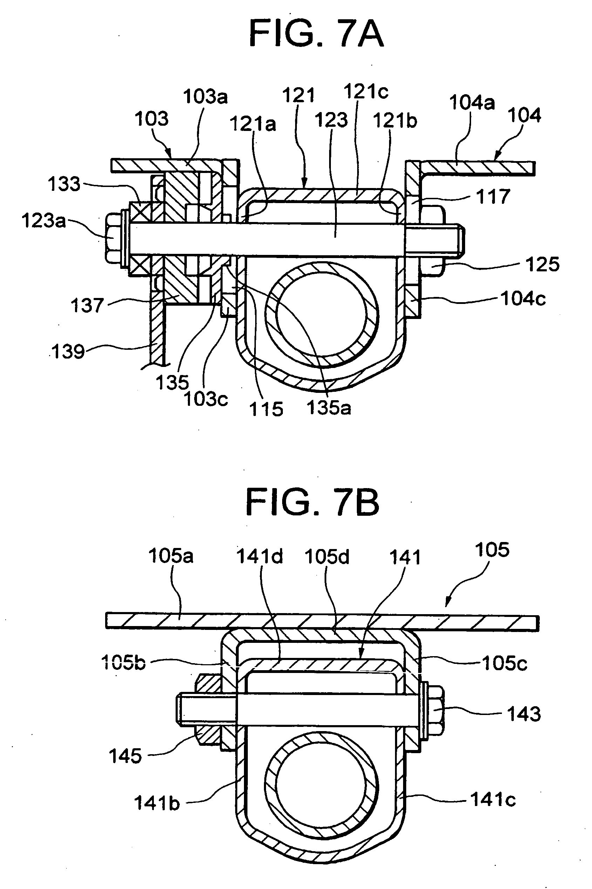

Fig. 6 is a side view of a second exemplary steering column apparatus. Fig. 7A is a cross-sectional view taken along line A-A in Fig. 6, and Fig. 7B is a cross-sectional view taken along line B-B in Fig. 6. A steering column 101 is mounted on a vehicle body-side strength member through upper brackets 103, 104 formed of steel plates by press-forming and a lower bracket formed of an alluminium alloy by die casting, so as to rotatably support an upper steering shaft (hereinafter simply called the steering shaft) through bearings 109, 111. A steering wheel (not shown) is attached to an upper end (the right end in Fig. 6) of the steering shaft 113, while a lower end (the left end in Fig. 6) of the steering shaft 113 is coupled to a rack and pinion mechanism of a steering mechanism through a universal joint, a lower steering shaft, and the like. Referring to Fig. 6, snap rings are provided on the right side of the bearing 109 and on the left side of the bearing 111, respectively.

The steering column 101 is formed of a steel pipe to be generally cylindrical by hydroforming, in which a distance unit 121 is integrally formed to be expanded at positions corresponding to the upper brackets 103, 104 which are to be mounted on the car body, and a lower expanded portion 141 is formed to be expanded at a position corresponding to a vehicle body mounting lower bracket 105 which is to be fixed to the car body.

The upper brackets 103, 104 have the width along the length of the steering shaft, and are symmetrically extended in a direction perpendicular to the extending direction of the steering shaft, that is, the right-and-left direction in Fig. 7A, and integrally comprise a pair of vehicle body mounting portions 103a,104a which are secured to the vehicle body strength member by fixing members such as bolts (not shown).

The body mounting portions 103a, 104a of the upper brackets 103, 104 are bent at right angles at inner sides respectively and extended backward (to the right in Fig. 6) and in the up-and-down direction to integrally form a pair of side plate portions 103c, 104c.

The distance unit 121 of the steering column 101 is integrally formed to be expanded upward in a higher position than the axial line of the steering shaft 113, and integrally comprises flat side walls 121a, 121b which are pressed and sandwiched by and between the side plate portions 103c, 104c of the upper brackets 103, 104 and an apex portion 121c which connects these side wall portions 121a, 121b at the upper end thereof.

The side plate portions 103c, 104c of the upper brackets 103, 104 are formed with elongated holes 115, 117 for tilt adjustment which will be described later, and elongated holes 130 which are extended in a predetermined length in the axial direction for telescopic position adjustment of the steering column are formed on the side wall portions 121a, 121b of the distance unit 121. The distance unit 121 is pressed and sandwiched between the side plate portions 103c, 104c of the upper bracket 103 with a predetermined clamping force by the use of a bolt 123 and a nut 125, the bolt 123 passing through the elongated holes 115, 117 for tilt adjustment of the side plate portions 121a, 121b and the elongated holes 130 of the side wall portions 121a, 121b. Between the head portion 123a of the bolt 123 and the side plate portion 103c on the bracket side, known cam elements 135, 137, a lever 139 for tilting and/or telescopic position adjustment and a thrust bearing 133 are interposed on the bolt 123 from the side of the side plate portion 103c.

The cam element 135 is unable to rotate since a projection 135a which is extended rightward in Fig. 7A is engaged with the elongated hole 115 of the bracket side plate 103c. The other cam element 137 is in an integral relationship with the lever 139 for tilting and/or telescopic position adjustment. When the lever 139 for tilting and/or telescopic position adjustment is manually rotated, the cam element 137 is rotated together. As a result, a relative position between the cam elements 135, 137 is changed in the axial direction of the bolt 123, so that a distance between the cam element 135 and the nut 125 is changed to change a distance between the side plate portions 103 c and 104c, thereby clamping and fixing the side wall portions 121a, 121b of the distance unit 121 or releasing this clamped and fixed state.

On the other hand, the body-side lower bracket 105 which is secured to the body-side strength member in a more front part of the vehicle than the upper brackets 103, 104 integrally comprises a lower body mounting member 105a which is fixed to the body-side strength member by bolts, or the like, and a column mounting member 105d which is provided with a pair of vertical plate portions 105b, 105c which are extended in parallel downward from the body mounting member 105a.

The lower expanded portion 141 formed in a lower part of the steering column 101 integrally comprises flat plate portions 141b, 141c which are extended in the up-and-down direction to be corresponding to the vertical plate portions 105b, 105c of the lower body mounting member 105a to be brought into pressure contact, respectively, and an apex portion 141d for connecting these portions to each other. The vertical plate portions 105b, 105c and the flat plate portions 141b, 141c of the column-side lower expanded portion 141 are respectively formed with elongated holes 140 extended in the axial direction, and a bolt 143 is inserted through these elongated holes to be clamped by the nut 145.

In the present exemplary apparatus, in order to adjust a tilting position and/or a telescopic position of the steering column, the position adjusting lever is rotated, and the clamped state of the distance unit 121 by the side plate portions 103c, 104c of the upper brackets 103, 104 is released, so as to move the steering column in the axial direction, and/or to change an inclination to clamp the distance unit 121 again.

In the present exemplary apparatus, when an inclination of the steering column is adjusted to an upper limit position, it is preferable that the lower end of the body-side upper bracket is positioned higher than the lower end of the column.

In the present exemplary apparatus, though the elongated holes are formed on the lower expanded portion 141, there may be provided only circular holes of a size enough for passing through the bolt 143, instead of the elongated holes 140, so as to adjust a tilting position only.

In addition, the shapes of the upper brackets 103, 104 are not limited to those described above, but may be any form so long as that it comprises the body mounting portion and the column mounting portion.

The specific description of the embodiment of the present invention is as stated above. However, the present invention is not limited to the foregoing embodiment. For example, plastic working of the steering column may be performed by employing a method other than hydroforming, such as explosive bulging, rubber bulging, or press-forming. A specific structure of the steering column apparatus, and a material, a shape, etc., of each constituent member may be properly changed within a scope and spirit of the present invention.

As described above, according to embodiments of a steering column apparatus of the present invention, it is rendered possible to reduce an expanded amount of the distance unit from the steering column to the minimum by, for example, disposing an adjusting bolt immediately above the steering shaft, so as to make a layout of the steering column apparatus easy. In case of the steering column apparatus having a tilt adjusting mechanism, a range of movement of the adjusting bolt is positioned comparatively high with respect to the steering column, so that the lower end of the body-side bracket is difficult to be protruded from the lower surface of the steering column. As a result, there is a less fear that a knee of the driver gets in contact with the body-side bracket at the time of collision or the like of the vehicle.

## Claims

1. A steering column apparatus comprising:
a steering shaft (13) to which a steering wheel may be mounted at a rear end portion thereof;
a cylindrical steering column (1) for rotatably supporting said steering shaft therein;
a vehicle body-side bracket arrangement (3, 4) comprising a portion (3a, 4a) to be fixed to a vehicle body strength member positioned above the steering column and further comprising a pair of vertically extending side plates (3c, 4c) disposed to sandwich and fix said steering column;
a distance unit (21) disposed between the side plates of said body-side bracket arrangement; and
position adjusting means for making the position of said steering column with respect to said body-side bracket arrangement adjustable within a predetermined adjustment range, said position adjusting means comprising an adjusting bolt (23) passing through said body-side bracket arrangement and through side plates of said distance unit and a fastening mechanism (27, 29, 31, 33) co-operable with said adjusting bolt to releasably clamp said distance unit through said body-side bracket arrangement,
said distance unit (21) being formed as an expanded portion of said steering column by plastic working;
said adjusting bolt being positioned above said steering shaft; and
an electric assist mechanism (51, 53) for assisting a rotational torque of said steering shaft being secured to a front end of said steering column.

2. A steering column apparatus according to Claim 1, wherein said steering column (1) is adjustable in a tilting direction with respect to said body-side bracket arrangement (3, 4), and the lower end of said body-side bracket arrangement is positioned higher than the lower surface of said steering column.

3. A steering column apparatus according to Claim 1 or 2, wherein said plastic working is performed by hydroforming.

4. A vehicle comprising a steering column apparatus according to any preceding claim.

## Patentansprüche

1. Lenkvorrichtung, die Folgendes umfasst:
eine Lenkspindel (13), an deren Hinterendabschnitt ein Lenkrad montiert werden kann;
eine zylindrische Lenksäule (1), in der die Lenkspindel drehbar gelagert ist;
eine Fahrzeugkarosserie-seitige Halterungsanordnung (3, 4), die einen Abschnitt (3a, 4a) umfasst, der an einem Fahrzeugkarosserieverstärkungselement, das über der Lenksäule angeordnet ist, anzubringen ist, und die des Weiteren ein Paar sich vertikal erstreckender Seitenplatten (3c, 4c) umfasst, die so angeordnet sind, dass sie die Lenksäule zwischen sich aufnehmen und fixieren;
eine Distanzeinheit (21), die zwischen den Seitenplatten der Karosserie-seitigen Halterungsanordnung angeordnet ist; und
ein Positionsverstellmittel, um die Position der Lenksäule relativ zu der Karosserie-seitigen Halterungsanordnung innerhalb eines vorgegebenen Verstellbereichs verstellbar zu machen, wobei das Positionsverstellmittel einen Verstellbolzen (23), der sich durch die Karosserie-seitige Halterungsanordnung und durch Seitenplatten der Distanzeinheit hindurch erstreckt, und einen Befestigungsmechanismus (27, 29, 31, 33) umfasst, der mit dem Verstellbolzen zusammenwirken kann, um die Distanzeinheit lösbar durch die Karosserie-seitige Halterungsanordnung hindurch festzuklemmen,
wobei die Distanzeinheit (21) als ein erweiterter Abschnitt der Lenksäule mittels plastischer Umformung ausgebildet ist;
wobei der Verstellbolzen über der Lenkspindel angeordnet ist; und
einen elektrischen Unterstützungsmechanismus (51, 53) zum Unterstützen eines Drehmoments der Lenkspindel, der an einem Vorderende der Lenksäule befestigt ist.

2. Lenkvorrichtung nach Anspruch 1, wobei die Lenksäule (1) in einer Neigungsrichtung relativ zu der Karosserie-seitigen Halterungsanordnung (3, 4) verstellbar ist und das untere Ende der Karosserie-seitigen Halterungsanordnung höher als die Unterseite der Lenksäule positioniert ist.

3. Lenkvorrichtung nach Anspruch 1 oder 2, wobei das plastische Umformen mittels Hydroformung ausgeführt wird.

4. Fahrzeug, das eine Lenkvorrichtung nach einem der vorangehenden Ansprüche umfasst.

## Revendications

1. Dispositif de colonne de direction comprenant :
un arbre de direction (13) auquel un volant de direction peut être monté au niveau d'une partie d'extrémité arrière de cclui-ci ;
une colonne cylindrique de direction (1) servant à soutenir de façon rotative ledit arbre de direction dans celle-ci ;
une disposition d'attache côté corps de véhicule (3, 4) comprenant une partie (3a, 4a) destinée à être fixée sur un élément résistant du corps de véhicule positionné au-dessus de la colonne de direction et comprenant en outre une paire de plaques latérales s'étendant verticalement (3c, 4c) disposée pour prendre en sandwich et fixer ladite colonne de direction ;
une unité d'espacement (21) disposée entre les plaques latérales de ladite disposition d'attache côté corps ; et
un moyen d'ajustement de position destiné à disposer la position de ladite colonne de direction par rapport à ladite disposition d'attache côté corps ajustable à l'intérieur d'une plage d'ajustements prédéterminée, ledit moyen d'ajustement de position comprenant un boulon d'ajustement (23) passant à travers ladite disposition d'attache côté corps et à travers des plaques latérales de ladite unité d'espacement et un mécanisme de fixation (27, 29, 31, 33) pouvant fonctionner avec ledit boulon d'ajustement pour claveter de façon lâche ladite unité d'espacement à travers ladite disposition d'attache côté corps,
ladite unité d'espacement (21) étant formé en tant que partie étendue de ladite colonne de direction par travail plastique,
ledit boulot d'ajustement étant positionné au-dessus dudit arbre de direction ; et
un mécanisme électrique d'assistance (51, 53) servant à aider qu'un couple de rotation dudit arbre de direction soit attaché à une extrémité avant de ladite colonne de direction.

2. Dispositif de colonne de direction selon la revendication 1, dans lequel ladite colonne de direction (1) est ajustable dans un sens de basculement par rapport à ladite disposition d'attache côté corps (3, 4), et l'extrémité inférieure de ladite disposition d'attache côté corps est positionnée plus en hauteur que la surface inférieure de ladite colonne de direction.

3. Dispositif de colonne de direction selon la revendication 1 ou 2, dans lequel le travail plastique est exécuté par hydroformage.

4. Véhicule comprenant un dispositif de colonne de direction selon l'une quelconque des revendications précédentes.
